Europäisches Patentamt

European Patent Office

Office européen des brevets

(19)

(11) Numéro de publication : **0 037 325 B1**

(12) **FASCICULE DE BREVET EUROPÉEN**

(45) Date de publication du fascicule du brevet :
13.06.84

(21) Numéro de dépôt : 81400469.3

(22) Date de dépôt : 25.03.81

(51) Int. Cl.³ : **C 25 C 7/00**, C 02 F 1/46,
**C 25 B 9/00**

(54) **Dispositif d'électrolyse à électrode poreuse et son application à la récupération des métaux à partir des solutions aqueuses.**

(30) Priorité : 28.03.80 FR 8007039

(43) Date de publication de la demande :
07.10.81 Bulletin 81/40

(45) Mention de la délivrance du brevet :
13.06.84 Bulletin 84/24

(84) Etats contractants désignés :
DE FR GB

(56) Documents cités :
FR-A- 2 178 895
US-A- 3 180 810

(73) Titulaire : **EASTMAN KODAK COMPANY**
**343 State Street**
**Rochester New York 14650 (US)**

(72) Inventeur : **Lacoste, Germain Institut National Poly-**
**technique**
**de Toulouse Institut du Génie Chimique**
**Chemin de la Loge F-31078 Toulouse Cedex (FR)**
Inventeur : **Olive, Henri Institut National Polytech-**
**nique**
**de Toulouse Institut du Génie Chimique**
**Chemin de la Loge F-31078 Toulouse Cedex (FR)**

(74) Mandataire : **Parent, Yves et al**
**Kodak-Pathé Département des Brevets et Licences**
**30, rue des Vignerons B.P. 60**
**F-94302 Vincennes Cedex (FR)**

# 0 037 325

## Description

La présente invention, due à la collaboration de Messieurs Germain Lacoste et Henri Olive, concerne un dispositif d'électrolyse et son application à la récupération de métaux à partir de solutions ioniques diluées.

Il est connu de réaliser des réactions électrochimiques avec des dispositifs d'électrolyse dont au moins l'une des électrodes est constituée d'un lit de particules conductrices de l'électricité, polarisées comme cathode ou comme anode, selon le type de réaction envisagée. Ces électrodes désignées sous le nom d'électrodes poreuses, ou volumiques, permettent donc, à cause de leurs surfaces spécifiques élevées, de traiter des solutions ioniques diluées pour lesquelles la densité de courant d'électrolyse est faible.

On a trouvé, selon la présente invention que, le rendement d'un dispositif à électrode poreuse peut être amélioré si cette électrode est pourvue de plusieurs sorties de courant, c'est-à-dire si cette électrode est associée avec plusieurs contre-électrodes.

La présente invention a en conséquence pour objet un dispositif d'électrolyse pour le traitement d'une solution par percolation en vue d'une réaction électrochimique, caractérisé en ce qu'il comprend :

a) n électrodes poreuses constituées par des lits de particules conductrices de l'électricité en contact chacune avec un raccordement électrique distinct ou non, traversées par la solution selon un même sens d'écoulement et affectées d'une première polarité et,

b) au moins n + 1 contre-électrodes affectées, d'une deuxième polarité, opposée à celle des lits de particules et associées à des moyens de réglage permettant d'imposer à chacune d'elles un potentiel distinct ajusté de façon permanente afin de maintenir constante la polarisation de l'électrode poreuse à son extrémité la plus proche de la contre-électrode.

Ces électrodes et ces contre-électrodes sont disposées de telle façon que le champ électrique engendré est soit colinéaire, soit perpendiculaire au sens d'écoulement.

La présente invention a une utilité particulière pour la récupération de métaux à partir de solutions aqueuses, notamment de solutions diluées. Dans ce cas, il s'agit de réaliser une réduction cathodique et les lits de particules sont utilisés comme cathode.

Le terme « solution diluée » désigne non seulement les solutions dans lesquelles la dilution de l'espèce ionique résulte de la teneur effective de la solution en cette espèce, mais aussi les solutions dans lesquelles l'espèce ionique étant sous forme complexée, seule une faible teneur de cette espèce ionique libre peut être présente dans la solution. Cette éventualité est par exemple réalisée dans le cas des solutions de fixage photographique usées qui contiennent de fortes quantités d'ions argent sous forme d'un complexe avec l'ion thiosulfate ; la concentration apparente en cation $Ag^+$, gouvernée par la réaction de formation du complexe, est donc faible dans une telle solution.

Ainsi qu'on l'a indiqué, la solution à traiter traverse le lit de particules ; cette percolation est faite sans que le lit soit fluidisé, en réglant la vitesse de percolation en fonction de la taille des particules du lit. Autrement dit, le dispositif selon l'invention comprend un lit de particules qui, au moins d'une façon approximative, peut être considéré comme fixe.

Selon un premier mode de réalisation, les électrodes et les contre-électrodes sont disposées de telle façon que le champ électrique est colinéaire au sens de l'écoulement de la solution électrolysée à travers les électrodes.

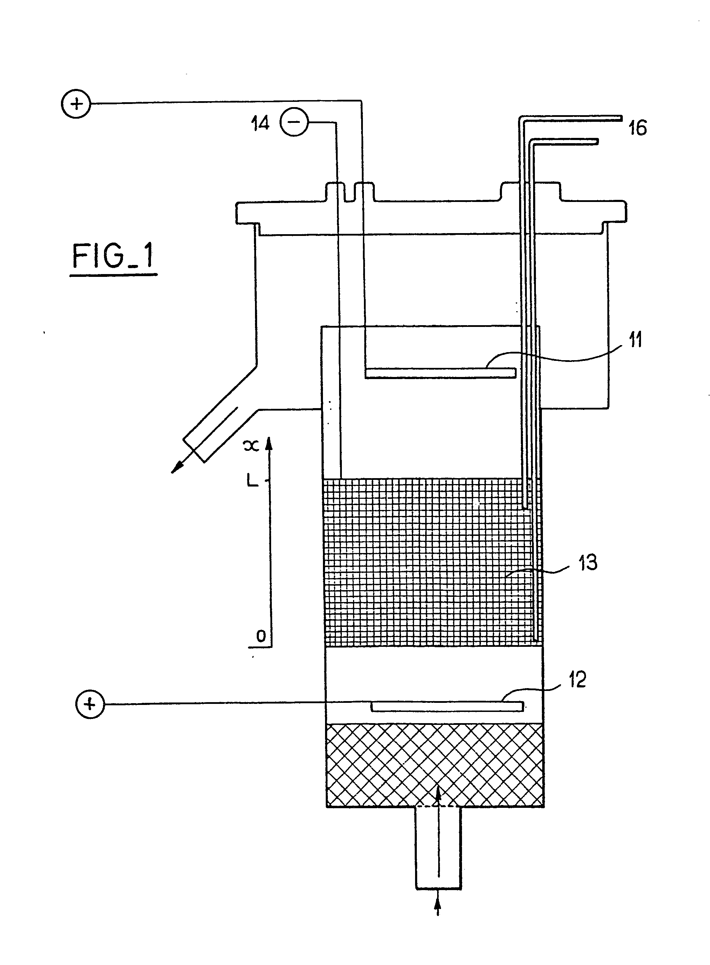

La Fig. 1 représente schématiquement le cas simple d'un dispositif à deux contre-électrodes 11 et 12 placées de part et d'autre d'un lit de particules 13 constituant l'électrode reliée à une borne électrique 14. Si un tel dispositif est conçu pour la récupération de métaux par réduction cathodique, le lit de particules joue le rôle de cathode et les deux contre-électrodes sont des anodes. Dans ce qui suit, les dispositifs de ce type seront désignés sous le nom de cellules à électrodes poreuses à champ axial. Les électrodes de référence 16 contrôlent le potentiel aux extrémités du lit.

L'intérêt de ces cellules peut être expliqué de la façon suivante.

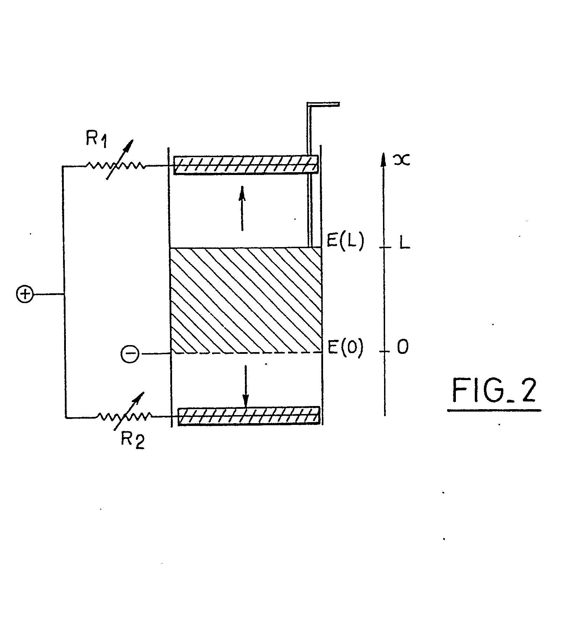

Dans une cellule à électrode poreuse à champ axial classique, c'est-à-dire comportant un lit de particules comme électrode et une seule contre-électrode, il a été montré que, la partie du lit de particules la plus proche de la contre-électrode étant portée à un potentiel déterminé en vue d'une réaction électrochimique, le potentiel subit à l'intérieur du lit une variation rapide en fonction de la distance entre l'électrode et la contre-électrode ; de fait, dans la partie du lit la plus éloignée de la contre-électrode, le potentiel atteint une valeur voisine du potentiel d'équilibre de la réaction électrochimique envisagée ; à ce potentiel, la réaction n'a plus lieu avec une vitesse suffisante. La conséquence de cette chute du potentiel dans le lit de particules est qu'une partie seulement de ce dernier est effectivement utilisé pour la réaction ; le rendement de la cellule d'électrolyse est donc limité quelles que soient par ailleurs les dimensions du lit de particules servant d'électrode. Dans le cas d'une cellule telle que celle schématiquement représentée à la Fig. 2, on observe le phénomène suivant : le potentiel dans la solution décroît en fonction de la distance ; mais en un point $x_m$, dont la localisation est fonction de la géométrie de la cellule et du lit, de la vitesse de percolation et des tensions de polarisation, la valeur du potentiel atteint un minimum en valeur absolue.

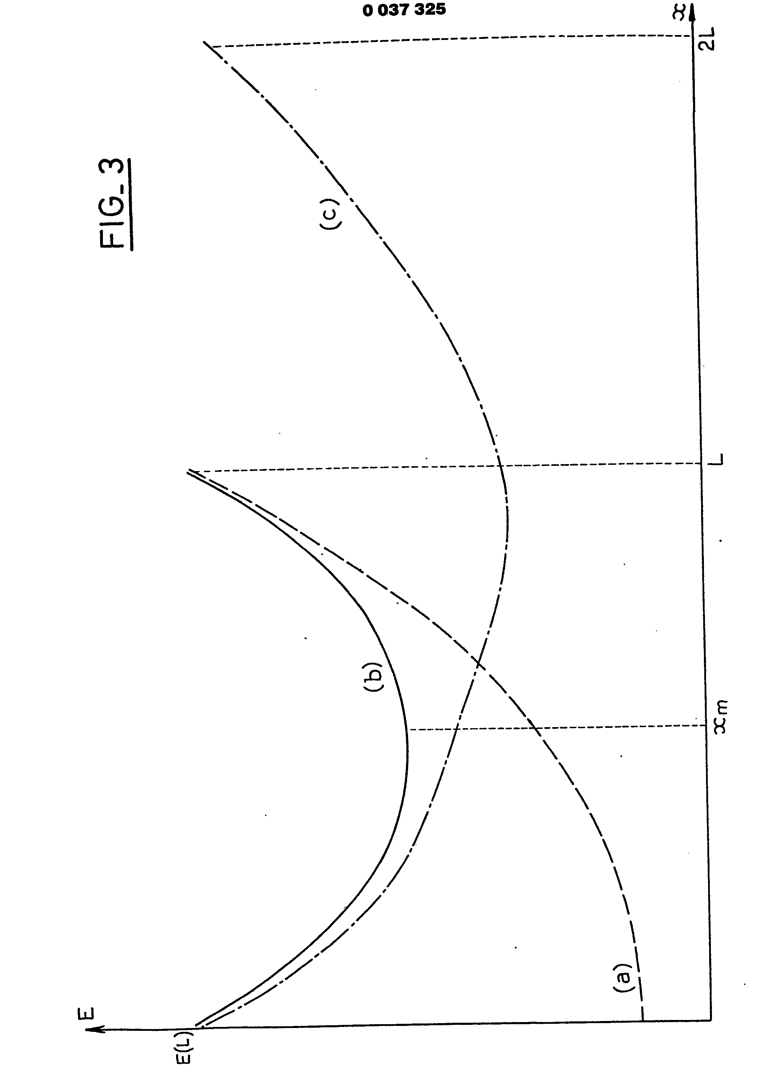

La Fig. 3 représente la variation du potentiel de la solution dans le lit de particules en fonction de la

2

hauteur du lit, dans le cas respectivement d'une cellule classique (courbe a) et d'une cellule à deux contre-électrodes (courbe b). On constate que l'adjonction d'une deuxième contre-électrode ramène les potentiels locaux de l'électrode poreuse à des valeurs plus proches du potentiel contrôlé E(L) (passage de la courbe a à la courbe b). De ce fait et compte tenu que la chute de potentiel permise peut être celle de la courbe (a) si l'électrode poreuse à une seule contre-électrode a été correctement dimensionnée, on peut augmenter la hauteur totale de lit de particules au-delà de L (courbe c) et retrouver ainsi des valeurs de potentiels locaux situées dans la même plage que celle du lit opérant avec une seule électrode. On peut ainsi multiplier la hauteur de lit utilisable par un facteur au moins égal à 2, alors qu'avec une cellule à une seule contre-électrode, cette hauteur de lit supplémentaire serait inutile, puisque se trouvant au voisinage du potentiel d'équilibre.

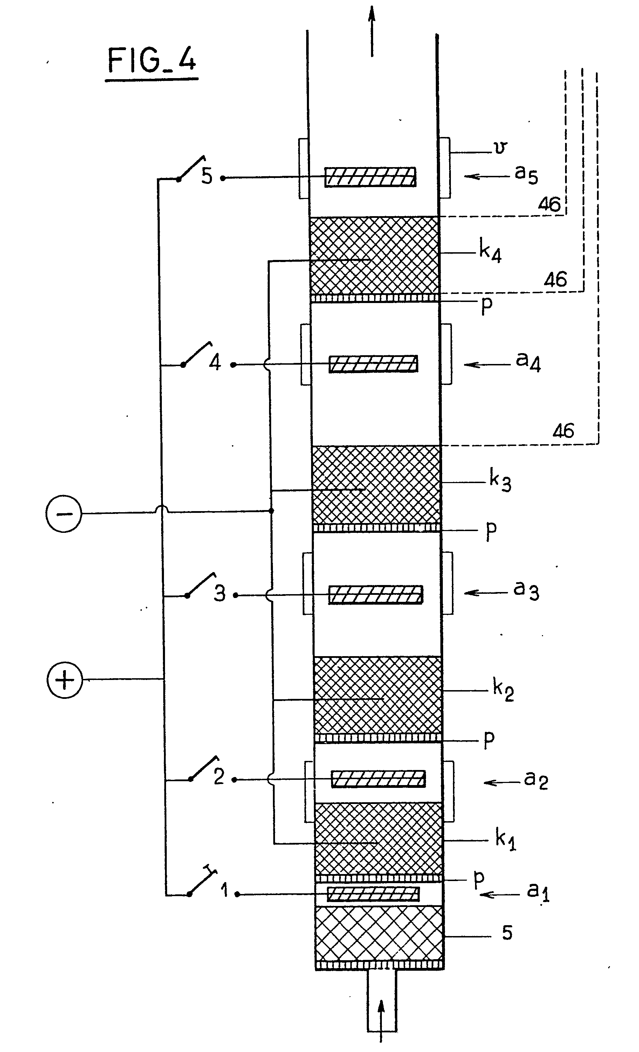

La Fig. 4 représente une variante plus complexe de la cellule précédente, selon laquelle on utilise plusieurs cathodes et plusieurs anodes alternées.

Selon un second mode de réalisation de l'invention, le champ électrique dans le lit de particules servant d'électrode poreuse n'est plus parallèle à l'écoulement de l'électrolyse, mais perpendiculaire à cet écoulement. Ce deuxième type de dispositif sera désigné sous le nom de cellule à électrode poreuse à champ radial. Une telle cellule peut elle-même être réalisée de plusieurs façons différentes, équivalentes du point de vue de la présente invention. D'une façon générale, une cellule à champ radial selon l'invention comprend :

— un lit de particules constituant l'électrode poreuse ;

— au moins deux contre-électrodes (concentriques par rapport au lit et disposées en succession le long de l'axe du lit ou parallèlement à cet axe.

Ces contre-électrodes sont portées à des potentiels respectifs différents ; le potentiel des contre-électrodes est déterminé en fonction du potentiel de travail de l'électrode lui-même fonction des résultats potentiométriques obtenus sur le système électrochimique considéré.

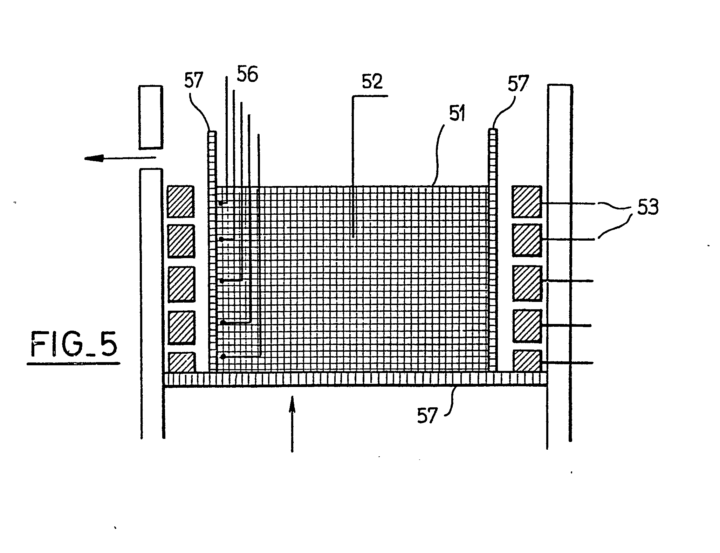

La Fig. 5 représente une vue en coupe d'un premier type de cellule à électrode poreuse à champ radial selon l'invention. Dans cette cellule, l'électrode poreuse (une cathode) est constituée d'un lit de particules central 51 avec un raccordement électrique 52. Les contre-électrodes sont des anodes annulaires 53, séparées du lit de particules par une paroi poreuse 57. La cellule comprend 5 électrodes de référence 56.

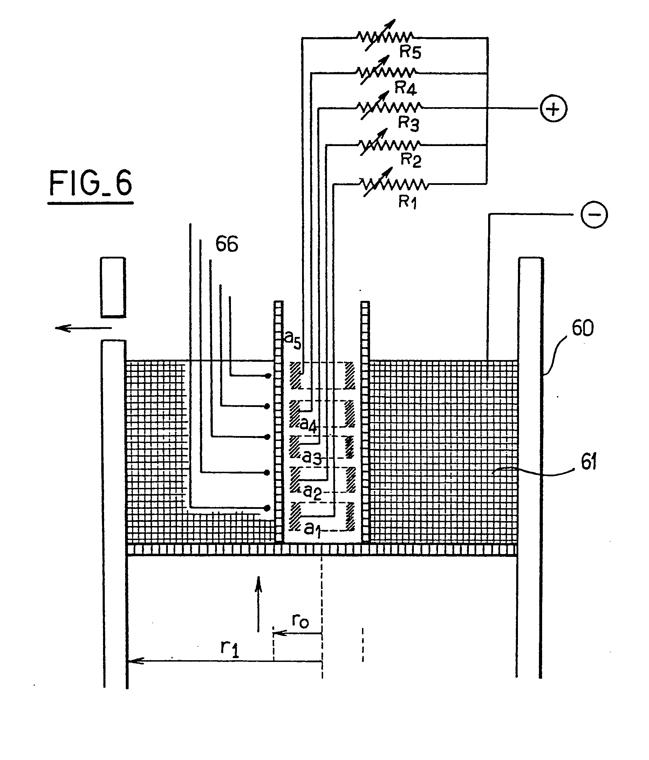

La Fig. 6 représente une vue en coupe d'un deuxième type de cellule à électrode poreuse à champ radial ; la disposition du lit de particules et des contre-électrodes est cette fois inversée, puisque les contre-électrodes sont distribuées le long de cet axe et sont entourées par le lit de particules.

Les électrodes poreuses utilisées selon l'invention sont en général constituées de particules ou de granulés, de forme et de dimensions variables, selon la réaction électrochimique envisagée. Lorsqu'on désire procéder à la récupération d'un métal par réduction cathodique, il est avantageux d'utiliser des billes de verre revêtues d'un dépôt métallique ou des billes de métal. On peut aussi utiliser des particules de carbone. Le diamètre des particules est choisi en fonction de données de dimensionnement de la cellule. Lorsqu'on fait travailler la cellule d'électrolyse en lit fixe, c'est-à-dire avec une vitesse de percolation faible, il est préférable de choisir des particules de diamètre suffisamment important, par exemple, compris entre 0,5 mm et 5 mm, de façon à éviter le colmatage trop rapide du lit.

Les contre-électrodes sont réalisées de façon classique. Dans le cas d'une utilisation du lit de particules comme cathode, les contre-électrodes jouent le rôle d'anodes. Elles sont réalisées en graphite, ou bien en métal. On peut par exemple utiliser des barreaux ou des cylindres de graphite, des grilles ou des fils platinés, selon le type de cellule.

D'une manière générale, les électrodes sont séparées des contre-électrodes, au besoin en utilisant une membrane permettant le passage des ions, par exemple en alumine poreuse, ou en matière plastique poreuse ; la membrane est constituée d'une matière inerte du point de vue des réactions électrochimiques en jeu dans la cellule. La perméabilité de cette membrane peut être sélective pour certains ions.

Le potentiel-solution étant fixé à une extrémité du lit de particules, la valeur du potentiel à l'autre extrémité du lit est fonction du potentiel des anodes, et des chutes ohmiques dans l'électrolyte, donc des distances relatives des anodes par rapport au lit de particules. En modifiant ces distances, on peut donc imposer un potentiel déterminé dans la solution. Dans le cas d'une cellule à champ axial, on peut modifier les distances anode-cathode, par exemple, en montant sur les anodes une vis de réglage ou un dispositif de coulissage, de façon à pouvoir les déplacer le long de l'axe de la cellule. Ce mode de réalisation est illustré à la figure 4 et à l'exemple 1. Dans le cas d'une cellule à champ radial, on peut utiliser un lit de particules à forme tronconique, les contre-électrodes étant distribuées sur un cylindre périphérique extérieur ; le lit de particules à forme tronconique peut en outre être monté de façon à coulisser le long de l'axe de la cellule (ou du sens de percolation) ; on peut ainsi faire varier la distance anode-cathode.

On peut aussi placer des résistances électriques dans le circuit extérieur anodique. Cette solution est connue et facile à mettre en œuvre comme cela est par exemple indiqué sur les schémas des Fig. 2 et 6.

La régulation des potentiels d'électrodes aux extrémités du lit de particules peut être réalisée d'une façon connue au moyen d'un potentiostat. Le potentiostat fournit une tension continue aux bornes de la cellule et il maintient constante la tension entre deux points de la cellule, par exemple, entre une électrode de référence et un point du lit de particules voisin de l'électrode de référence. Un potentiel de « consigne », choisi sur la courbe intensité-potentiel de la réaction électrochimique envisagée, est affiché sur le potentiostat et comparé en permanence au potentiel-solution dans le lit de particules tel qu'il est mesuré par l'électrode de référence. En fonction de l'écart enregistré entre ce potentiel et le potentiel de consigne, le régulateur du potentiostat provoque une variation du potentiel d'anode qui tend à annuler cet écart. Les perturbations ainsi compensées peuvent provenir de variations de concentration, de vitesse d'écoulement, de température, etc.

## Exemple 1

On utilise le dispositif représenté schématiquement en coupe à la Fig. 4. Cinq anodes en grille de titane platiné ($a_1$, $a_2$, $a_3$, $a_4$ et $a_5$) et quatre cathodes ($k_1$, $k_2$, $k_3$ et $k_4$) intercalées se trouvent dans une colonne cylindrique en matière plastique Altuglass (marque déposée) de 4,2 cm de diamètre interne. Les cathodes sont constituées de billes d'argent de diamètre moyen égal à 2,7 mm ; les lits ont tous une hauteur de 1,8 cm. Les cathodes sont reliées à la borne « travail » d'un potentiostat par un fil d'argent pur. Elles reposent sur des filtres poreux (p) qui assurent, avec un lit de billes de verre (s), une distribution uniforme de l'électrolyte sur toute la section de la cellule. La solution passe dans un débimètre et est admise à la partie inférieure de la cellule ; elle ressort par une déverse située à la partie supérieure.

Des vis de réglage (v) permettent de déplacer les anodes et donc de faire varier le potentiel solution aux limites des lits de particules les plus proches. Les interrupteurs 1, 2, 3, 4 et 5 permettent de mettre en jeu 1, 2, 3, 4 ou 5 anodes.

Des capillaires latéraux 46, chacun relié à l'aide d'une seringue à une électrode de référence $Hg/Hg_2SO_4/K_2SO_4$ saturée (E.S.S.) permettent de mesurer le potentiel de la solution en différents points du lit.

On fait percoler à travers le lit une solution électrolytique de sulfate d'argent dans l'acide sulfurique IN.

On effectue les essais suivants :

a) l'anode $a_5$ seule est mise sous tension :
on a 1 lit cathodique ($k_1$ + $k_2$ + $k_3$ + $k_4$) et 1 anode ($a_5$),
b) les anodes $a_1$ et $a_5$ sont mises sous tension :
on a 1 lit cathodique ($k_1$ + $k_2$ + $k_3$ + $k_4$) et 2 anodes ($a_1$ et $a_5$),
c) les anodes $a_1$, $a_3$ et $a_5$ sont mises sous tension :
on a 2 lits cathodiques ($k_1$ + $k_2$ et $k_3$ + $k_4$) et 3 anodes ($a_1$, $a_3$ et $a_5$),
d) les 5 anodes sont mises sous tension :
on a 4 lits cathodiques et 5 anodes.

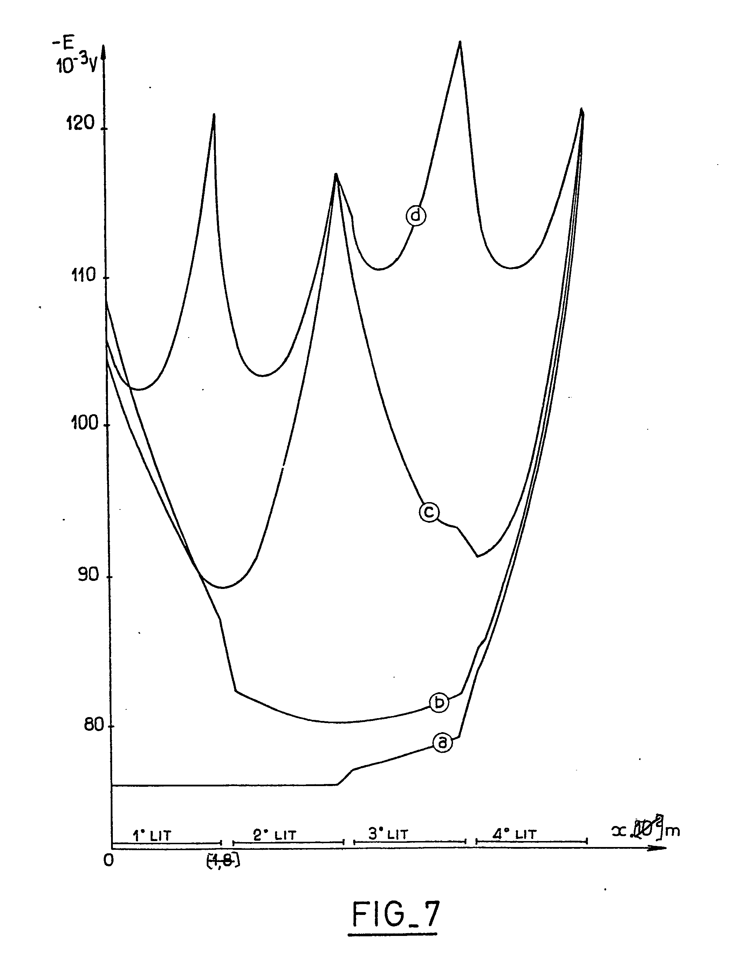

Les courbes de la Fig. 7 donnent le potentiel de la solution en fonction de la hauteur du lit, pour chaque essai. On voit que le potentiel de la solution se maintient à des valeurs plus négatives sur une plus grande hauteur de lit, quand le nombre d'anodes est plus élevé.

Les rendements calculés en pourcentage d'argent disparu par rapport à la concentration initiale de la solution, sont donnés au tableau suivant :

| Concentration initiale en argent | Vitesse de percolation | a | b | c | d |
|---|---|---|---|---|---|
| 108 mg/l | 4,18 mm/s | 5 % | 10 % | 17 % | 28 % |
| 46 mg/l | 0,4 mm/s | 39 % | 65 % | 82 % | 91 % |

On voit qu'à vitesse élevée, pour un même lit cathodique, le rendement est près de 6 fois supérieur avec 5 anodes qu'avec une.

## Exemple 2

On réalise une cellule à électrode poreuse à champ radial telle que représentée schématiquement à la Fig. 6, comportant un lit de particules annulaire 61 servant de cathode et cinq anodes distinctes $a_1$, $a_2$, $a_3$, $a_4$ et $a_5$ distribuées le long de l'axe de la cellule.

Le corps de la cellule est constitué d'une colonne en matière plastique Altuglass 60 (marque déposée) d'un diamètre de 5 cm. Les anodes sont constituées de fils de platine enroulés en spirales. Chaque anode a 2 cm de hauteur et est espacée de l'anode suivante par une distance de 1 cm. L'électrode poreuse est constituée de billes de verre argenté d'un diamètre moyen égal à environ 3 mm ; le compartiment cathodique annulaire est limité par un filtre Norton (marque déposée) en alumine jouant le rôle de membrane poreuse. Le rayon $r_1$-$r_0$ du lit annulaire est de 1 cm. La cellule comprend en regard de chaque anode, une électrode de référence 66.

La Fig. 6, représente en outre le schéma électrique du branchement des électrodes. Les résistances variables $R_1$, $R_2$, $R_3$, $R_4$ et $R_5$ servent à régler les potentiels des anodes de façon à maintenir à la valeur

4

désirée le potentiel de la solution à la cathode à son extrémité la plus proche des anodes et ceci aux différents niveaux du lit de particules.

On utilise cette cellule à champ radial pour électrolyser une solution contenant 7,45 g d'argent par litre, sous forme complexée par le thiosulfate.

Toutes les anodes étant raccordées à une même source de potentiel réglée de façon à avoir un potentiel solution à la partie supérieure du lit égal à − 850 mV/ESS, donc selon un schéma équivalent à une seule anode, on constate que le potentiel décroît rapidement et que le dépôt d'argent ne se produit que dans la partie supérieure de la section de lit, en regard de l'anode 5 ; l'intensité du courant d'électrolyse est de 250 mA.

Si on reprend la même expérience en branchant seulement une seule anode quelle qu'elle soit, on obtient le même résultat.

Si on reprend le même mode opératoire, mais en branchant cette fois les anodes $a_1$ et $a_5$ et en ajustant les potentiels d'anode, au moyen des résistances pour avoir, dans la solution à la partie supérieure des sections de lits en regard des anodes $a_1$ et $a_5$ un potentiel de − 850 mV/ESS, on constate que le dépôt d'argent se produit dans ces deux sections de lits ; le courant d'électrolyse est cette fois d'environ 500 mA.

En branchant de la même façon, cette fois les cinq anodes, on peut faire travailler l'ensemble du lit, c'est-à-dire, obtenir un dépôt d'argent sur toute la hauteur de ce lit. Le courant d'électrolyse est cette fois de 1 250 mA, environ.

## Revendications

1. Dispositif d'électrolyse pour le traitement d'une solution par percolation en vue d'une réaction électrochimique, caractérisé en ce qu'il comprend :

a) n électrodes constituées par des lits de particules conductrices de l'électricité en contact chacune avec un raccordement électrique distinct ou non, traversées par la solution selon un même sens d'écoulement, et affectées d'une première polarité et,

b) au moins (n + 1) contre-électrodes, affectées d'une deuxième polarité, opposée à celle des lits de particules, et associées à des moyens de réglage permettant d'imposer à chacune d'elles un potentiel distinct ajusté de façon permanente afin de maintenir constante la polarisation de l'électrode poreuse à son extrémité la plus proche de la contre-électrode, n étant égal ou supérieur à 1, ces électrodes et ces contre-électrodes étant disposées de telle façon que le champ électrique engendré est soit colinéaire, soit perpendiculaire au sens d'écoulement.

2. Dispositif conforme à la revendication 1, caractérisé en ce que la tension appliquée aux contre-électrodes est réglée par des résistances variables.

3. Dispositif conforme à la revendication 1, caractérisé en ce que la tension appliquée aux contre-électrodes est réglée par des moyens permettant de faire varier les distances électrode/contre-électrode.

4. Dispositif conforme à l'une quelconque des revendications 1 à 3, caractérisé en ce que les électrodes et les contre-électrodes sont disposées de telle sorte que le champ électrique engendré est colinéaire au sens d'écoulement, les électrodes et les contre-électrodes étant disposées alternativement en colonne.

5. Dispositif conforme à l'une quelconque des revendications 1 à 3, caractérisé en ce que les contre-électrodes sont disposées de telle sorte que le champ électrique engendré est radial et perpendiculaire au sens d'écoulement.

6. Dispositif conforme à la revendication 5, caractérisé en ce que les électrodes sont séparées des contre-électrodes par des membranes perméables aux ions, mais non perméables aux solutions.

7. Dispositif conforme à l'une quelconque des revendications 5 et 6, caractérisé en ce qu'il comprend un lit de particules constituant l'électrode contenu dans un volume annulaire délimité par deux parois cylindriques, une paroi externe isolante et une paroi interne poreuse, des contre-électrodes disposées dans l'espace interne libre de l'électrode annulaire, toutes les contre-électrodes ayant leurs axes confondus avec l'axe de ladite électrode, et étant disposées sur toute la hauteur du lit de particules.

8. Dispositif conforme à l'une quelconque des revendications 5 et 6, caractérisé en ce qu'il comprend un lit de particules constituant l'électrode et contenu dans une colonne de section cylindrique à paroi poreuse et des contre-électrodes annulaires distinctes externes à l'électrode, distribuées sur toute la hauteur du lit de particules.

9. Dispositif conforme à l'une quelconque des revendications 6 à 8, caractérisé en ce que les électrodes sont séparées des contre-électrodes par des membranes à perméabilité ionique sélective, mais non perméables aux solutions.

10. Utilisation d'un dispositif conforme à l'une quelconque des revendications 1 à 9, caractérisé en ce qu'on utilise une électrode poreuse constituée de particules polarisées cathodiquement, les contre-électrodes étant polarisées anodiquement, et en ce qu'on fait circuler dans ce dispositif une solution de traitement photographique contenant des ions argent en même temps qu'on fait passer un courant électrique dans la solution entre la cathode et les anodes de façon à provoquer la réduction des ions argent et le dépôt de l'argent métallique sur les particules.

**0 037 325**

11. Utilisation conforme à la revendication 10, caractérisée en ce que la surface des particules a été préalablement argentée.

**Claims**

1. Electrolysis device for percolating a solution with a view to an electrochemical reaction, characterized in that it comprises :

a) n electrodes consisting of beds of electrically conductive particles in contact each with a separate or not separate electric connection, the direction of the solution flow being the same in each bed and each bed having a first same polarity, and

b) at least (n + 1) counter-electrodes having a second polarity opposite to that of the beds of particles, and associated with adjusting means permitting to impose on each of them a separate potential permanently adjusted in order to maintain constant the bias of the porous electrode at its end which is the closest to the counter-electrode, n being equal to or higher than 1, said electrodes and counter-electrodes being disposed in such a manner that the resulting electric field and the solution flow directions are either colinear or perpendicular.

2. Device as in claim 1, characterized in that the voltage applied to the counter-electrodes is adjusted by variable resistors.

3. Device as in claim 1, characterized in that the voltage applied to the counter-electrodes is adjusted by means permitting to vary the electrode to counter-electrode distances.

4. Device as in any of claims 1 to 3, characterized in that the electrodes and counter-electrodes are disposed in such a manner that the resulting electric field is colinear to the percolation direction, the electrodes and counter-electrodes being in superposition alternately in a column.

5. Device as in any of claims 1 to 3, characterized in that the counter-electrodes are disposed in such a manner that the resulting electric field is radial and perpendicular to the flow direction.

6. Device as in claim 5, characterized in that the electrodes are insulated from the counter-electrodes by membranes permeable to ions but impermeable to solutions.

7. Device as in any of claims 5 and 6, characterized in that it comprises a bed of particles constituting the electrode contained in an annular volume defined by two cylindrical walls, an insulating external wall and a porous internal wall, counter-electrodes disposed in the internal free space of the annular electrode, all the counter-electrodes having their axes merged with the axis of said electrode, and being disposed on all the height of the bed of particles.

8. Device as in any of claims 5 and 6, characterized in that it comprises a bed of particles constituting the electrode and contained in a column having a cylindrical section with a porous wall and separate annular counter-electrodes outside the electrode, distributed on all the height of the bed of particles.

9. Device as in any of claims 6 to 8, characterized in that the electrodes are separated from the counter-electrodes by membranes which have an ionic selective permeability but are impermeable to solutions.

10. Use of a device as in any of claims 1 to 9, characterized in that a porous electrode comprised of beds of particles cathodically biased is used, the counter-electrode being anodically biased and an ionic silver containing photographic processing solution being flown in said device, and simultaneously electrical current being flown between the cathode and anodes so as to have the ionic silver reduced and metallic silver deposited onto the particles.

11. Use as in claim 10, characterized in that the surface of particles has been initially silver coated.

**Ansprüche**

1. Elektrolysevorrichtung zur Behandlung einer Flüssigkeit durch Perkolation mit dem Ziel einer elektrochemischen Reaktion, dadurch gekennzeichnet, daß sie umfaßt :

a) n Elektroden, die aus jeweils mit einem separaten oder nicht separaten elektrischen Anschluß in Berührung stehenden elektrisch leitfähigen Teilchenschichtungen bestehen, wobei die Strömungsrichtung der Lösung in jeder Schichtung gleich ist und jede Schichtung eine erste Polarität besitzt, und

b) mindestens (n + 1) Gegenelektroden, die eine zweite, der Polarität der Teilchenschichtungen entgegengesetzte Polarität besitzen und Regulierungsmitteln zugeordnet sind, die es ermöglichen, an jede Elektrode ein getrenntes Potential anzulegen, das ständig angepaßt wird, um die vorspannung der porösen Elektrode an ihrem der Gegenelektrode am nächsten gelegenen Ende konstant zu halten, wobei n gleich oder größer ist als 1, und die Elektroden und Gegenelektroden derart angeordnet sind, daß das so erzeugte elektrische Feld entweder in derselben Richtung wie die Lösungsströmung oder senkrecht dazu verläuft.

2. Vorrichtung nach Anspruch 1, dadurch gekennzeichnet, daß die an den Gegenelektroden anliegende Spannung durch variable Widerstände reguliert wird.

3. Vorrichtung nach Anspruch 1, dadurch gekennzeichnet, daß die an den Gegenelektroden anliegende Spannung durch Mittel reguliert wird, die es ermöglichen, die Abstände zwischen Elektrode und Gegenelektrode zu variieren.

6

4. Vorrichtung nach einem der Ansprüche 1 bis 3, dadurch gekennzeichnet, daß die Elektroden und Gegenelektroden so angeordnet sind, daß das erzeugte elektrische Feld in der Strömungsrichtung verläuft und die Elektroden und Gegenelektroden in einer Säule abwechselnd übereinander angeordnet sind.

5. Vorrichtung nach einem der Ansprüche 1 bis 3, dadurch gekennzeichnet, daß die Gegenelektroden so angeordnet sind, daß das erzeugte elektrische Feld radial und senkrecht zur Strömungsrichtung verläuft.

6. Vorrichtung nach Anspruch 5, dadurch gekennzeichnet, daß die Elektroden von den Gegenelektroden durch Membranen getrennt sind, die für Ionen durchlässig aber für Lösungen undurchlässig sind.

7. Vorrichtung nach einem der Ansprüche 5 und 6, dadurch gekennzeichnet, daß sie eine die Elektrode bildende Teilchenschichtung aufweist, die in einem von zwei zylindrischen Wandungen, einer isolierenden äußeren und einer porösen inneren Wandung, begrenzten ringförmigen Raum angeordnet ist, sowie Gegenelektroden, die im freien Innenraum der ringförmigen Elektrode vorgesehen sind, wobei die Achsen aller Gegenelektroden mit der Achse dieser Elektrode vereinigt sind und die Gegenelektroden über die gesamte Höhe der Teilchenschichtung angeordnet sind.

8. Vorrichtung nach einem der Ansprüche 5 und 6, dadurch gekennzeichnet, daß sie eine die Elektrode bildende Teilchenschichtung umfaßt, die in einer Säule vorgesehen ist, welche einen zylindrischen Abschnitt mit einer porösen Wandung und separate ringförmige, über die gesamte Höhe der Teilchenschichtung verteilte Gegenelektroden außerhalb der Elektrode aufweist.

9. Vorrichtung nach einem der Ansprüche 6 bis 8, dadurch gekennzeichnet, daß die Elektroden von den Gegenelektroden durch Membranen getrennt sind, die eine ionenselektive Durchlässigkeit besitzen, jedoch undurchlässig für Lösungen sind.

10. Verwendung einer Vorrichtung nach einem der Ansprüche 1 bis 9, dadurch gekennzeichnet, daß eine poröse Elektrode aus kathodisch vorgespannten Teilchen zur Anwendung gelangt, wobei die Gegenelektroden anodisch vorgespannt sind und daß man eine ionische silberhaltige photographische Behandlungslösung durch das Gerät strömen und gleichzeitig einen elektrischen Strom zwischen der Kathode und den Anoden fließen läßt, so daß das ionische Silber reduziert und metallisches Silber auf den Teilchen abgelagert wird.

11. Verwendung nach Anspruch 10, dadurch gekennzeichnet, daß die Oberfläche der Teilchen bereits zu Anfang mit Silber beschichtet worden ist.

FIG_1

FIG. 2

FIG_3

**0 037 325**

FIG_4

FIG_5

## FIG_6

FIG_7